# DEMANDE DE BREVET EUROPEEN

(11) **EP 2 808 606 A1**
(43) Date de publication de la demande: **03.12.2014**
(21) Numéro de dépôt: 14169134.5
(22) Date de dépôt: 20.05.2014
(51) Int. Cl.: F23K 3/02, F23K 3/16, B65G 51/02, F23K 5/16

(54) **Dispositif et procédé de transport et distribution de combustible solide**

(30) Priorité: 27.05.2013 FR 1354767
(71) Demandeur: Eurl Dominique Hanne, 60240 Courcelles les Gisors (FR)
(72) Inventeur: Hanne, Dominique, 60240 Courcelles les Gisors (FR)
(74) Mandataire: Debay, Yves

(57) **Abrégé**

La présente invention présente un dispositif de transport et distribution de combustible solide comprenant au moins un réservoir de stockage (1) de combustible présenté sous forme de granulés (0) de taille sensiblement uniforme, caractérisé en ce qu'il comprend au moins un réservoir intermédiaire (2) agencé pour sélectionner chaque granulé (0) combustible un par un et pour mener lesdits granulés (0) vers un élément de sortie (3) en communication avec le réservoir intermédiaire (2), l'élément de sortie (3) conduisant les granulés vers des moyens de guidage (4) motorisés des granulés (0), agencés de sorte que les granulés (0) progressent sur lesdits moyens de guidage (4) en file indienne vers l'entrée d'un tube évidé (5) dont le diamètre interne est sensiblement supérieur au diamètre d'un granulé, le tube comprenant une ouverture réalisée dans l'épaisseur de sa paroi et formant un conduit oblique par rapport à l'axe du tube débouchant dans la partie évidée du tube (5), le conduit oblique étant destiné à être relié à un générateur pneumatique agencé pour délivrer un gaz sous pression de manière à conduire chaque granulé (0) présent dans le tube (5) vers une chambre de combustion via un tuyau relié d'une part à la sortie dudit tube évidé (5) et d'autre part à la chambre de combustion, le dispositif comprenant en outre des moyens de commande destinés à piloter au moins les éléments motorisés et le générateur pneumatique dudit dispositif.

## Description

### DOMAINE TECHNIQUE DE L'INVENTION

La présente invention se rapporte au domaine des dispositifs et procédés de transport et de distribution de combustible. Plus particulièrement, l'invention concerne un dispositif et un procédé de transport et de distribution de combustible solide dans les systèmes de chauffage.

### ARRIERE-PLAN TECHNOLOGIQUE DE L'INVENTION

De façon connue en soi, il existe des systèmes de chauffage, aussi destinés aux professionnels et/ou aux particuliers, qui fournissent de l'énergie à partir de la combustion de carburant solide, notamment des carburants solides issus de la biomasse. Pour assurer la sécurité de l'installation, le réservoir comprenant le stock de combustible est la plupart du temps déporté du foyer de combustion. Il est donc prévu pour ces systèmes de chauffage des dispositifs permettant de transporter le combustible depuis la zone de stockage vers la zone de combustion, de manière à alimenter continuellement le système de chauffage, ou tout du moins tant que la combustion est désirée.

Il est connu dans l'art antérieur de tels systèmes de chauffage proposant un dispositif de distribution de combustible solide du réservoir de stockage vers le foyer de combustion. A titre d'exemple, citons la demande de brevet WO 2005/018302 qui divulgue un distributeur pneumatique pour un matériau granulaire et/ou pulvérulent. Cette demande décrit que le distributeur comprend une entée d'air adjacente à un conduit, permettant ainsi le transport puis la distribution de la matière granulaire et/ou pulvérulente.

Citons également la demande US 2003133759 qui divulgue un dispositif pour distribuer un matériau sous forme granulaire initialement stocké dans une trémie, distribué via un conduit perpendiculaire à un conduit venturi permettant le transport du matériau dans un tube situé dans le prolongement du venturi. Le système comprend également une roue permettant de réguler la distribution des matériaux dans le venturi.

La demande de brevet US 6012875 divulgue un dispositif permettant de distribuer une quantité bien précise de granulés depuis une trémie vers un réservoir. Le conduit en sortie de la trémie est sensiblement perpendiculaire à un conduit comprenant un conduit venturi et dans lequel circule de l'air comprimé permettant au final le transport des granulés dans le conduit en aval du conduit venturi.

La demande de brevet EP 2053310 divulgue un système de transport de granulés depuis une zone de stockage vers une zone de combustion, les granulés initialement stockés dans une trémie étant déposés par gravité dans un conduit dans lequel un flux d'air généré par un ventilateur permet le convoi des granulés vers des clapets de distribution dans la zone de combustion.

Cependant, tous ces systèmes de distribution présentent un certains nombre d'inconvénients concernant leur utilisation et mise en oeuvre. Des moyens annexes aux moyens pneumatiques, permettant de faciliter la précision de la distribution du combustible ne sont pas décrits. Il n'est pas non plus divulgué dans ces documents de moyens techniques permettant d'évaluer la conformité du combustible devant être distribué dans le système de chauffage.

### DESCRIPTION GENERALE DE L'INVENTION

La présente invention a donc pour objet de proposer un dispositif et un procédé de transport et de distribution de carburant solide, fiable permettant de pallier un ou plusieurs des inconvénients de l'art antérieur.

L'invention propose un dispositif et un procédé de transport et de distribution de carburant solide permettant de distribuer de manière précise et quantifiée du combustible solide issu de la biomasse, tout en s'assurant que le combustible circulant dans le dispositif vers le système de chauffage est parfaitement conforme aux normes imposées par le système de chauffage et le dispositif de distribution, notamment dimensionnelles.

A cet effet, l'invention concerne un dispositif de transport et distribution de combustible solide comprenant au moins un réservoir de stockage de combustible présenté sous forme de granulés de taille sensiblement uniforme, caractérisé en ce qu'il comprend au moins un réservoir intermédiaire agencé pour sélectionner chaque granulé combustible un par un et pour mener lesdits granulés vers des moyens de guidage motorisés des granulés, lesdits moyens de guidage étant compris dans le dispositif et agencés de sorte que les granulés progressent sur lesdits moyens de guidage en file indienne vers l'entrée d'un tube évidé compris dans le dispositif et dont le diamètre interne est sensiblement supérieur au diamètre d'un granulé, le tube évidé étant relié par un tuyau à une chambre de combustion, le tube comprenant une ouverture réalisée dans l'épaisseur de sa paroi et formant un conduit oblique par rapport à l'axe du tube débouchant dans la partie évidée du tube, le conduit oblique étant destiné à être relié à un générateur pneumatique agencé pour délivrer un gaz sous pression de manière à conduire chaque granulé présent dans le tube vers la chambre de combustion via le tuyau relié à la chambre de combustion, le dispositif comprenant en outre des moyens de commande destinés à piloter au moins les éléments motorisés et le générateur pneumatique dudit dispositif.

Selon une autre particularité, le dispositif de transport et distribution de combustible solide est caractérisé en ce que le réservoir intermédiaire est un bol vibrant dont la fréquence et l'intensité des vibrations sont choisies via les moyens de commande.

Selon une autre particularité, le dispositif de transport et distribution de combustible solide est caractérisé en ce que les moyens de guidage comprennent deux tiges cylindriques parallèles destinées à être reliées à des moyens de motorisation pilotés par les moyens de commande et permettant la rotation axiale de chacune des tiges, les tiges tournant en sens opposé de manière à permettre le mouvement des granulés vers le tube évidé, les tiges étant inclinées de sorte que la gravité facilite le mouvement des granulés en direction du tube évidé.

Selon une autre particularité, le dispositif de transport et distribution de combustible solide est caractérisé en ce qu'il comprend un moyen de mesure de la taille des granulés situé en vis-à-vis des moyens de guidage, ledit moyen de mesure étant un capteur relié aux moyens de commande et destiné à mesurer la longueur de chaque granulé progressant sur les moyens de guidage.

Selon une autre particularité, le dispositif de transport et distribution de combustible solide est caractérisé en ce que le moyen de mesure de la taille des granulés situé en vis-à-vis des moyens de guidage comprend deux capteurs reliés aux moyens de commande, positionnables de sorte qu'ils soient distants d'une longueur approximative souhaitée, et destinés via les moyens de commande d'une part à mesurer la longueur d'un granulé quelque soit la vitesse du granulé et d'autre part à réguler l'approvisionnement en granulés du bol vibrant.

Selon une autre particularité, le dispositif de transport et distribution de combustible solide est caractérisé en ce qu'il comprend un clapet solidaire du tube évidé, le clapet étant couplé à des moyens de motorisation pilotés par les moyens de commande pour boucher ou non l'entrée dudit tube évidé.

Selon une autre particularité, le dispositif de transport et distribution de combustible solide est caractérisé en ce qu'il comprend un moyen de détection de présence de granulés et de confirmation ou infirmation d'une taille normale par comparaison du temps de présence du granulé détecté par le moyen de détection de présence à l'entrée du tube évidé par rapport à un temps t₀, le clapet étant piloté par les moyens de commande de manière à obstruer le conduit principal du tube au bout d'un temps t₁ suivant la détection d'un granulé, ces temps t₀ et t₁ étant prédéfini et mémorisé dans une zone mémoire des moyens de commande.

Selon une autre particularité, le dispositif de transport et distribution de combustible solide est caractérisé en ce que les moyens de motorisation des moyens de guidage permettent sur commande d'inverser le sens de rotation des tiges provoquant, en cas de présence sur les moyens de guidage de certains granulés ne répondant pas aux critères dimensionnels mémorisés et mesurés, le pincement d'un tel granulé par les tiges induisant l'écartement desdites tiges et la chute du granulé, de manière à empêcher lesdits granulés ne répondant pas aux critères dimensionnels mémorisés et mesurés d'accéder à l'entrée du premier tube évidé.

Selon une autre particularité, le dispositif de transport et distribution de combustible solide est caractérisé en ce qu'il comprend un élément de sortie en communication avec le réservoir intermédiaire, le dispositif comprenant également en sortie un dispositif de freinage des granulés, ralentissant les granulés avant leur entrée dans la chambre de combustion.

Selon une autre particularité, le dispositif de transport et distribution de combustible solide est caractérisé en ce qu'il comprend au moins un appareil de mesure barométrique permettant de mesurer la pression de gaz en tout point du dispositif, et déclenche de nouvelles impulsions pneumatiques si la pression ne chute pas assez rapidement.

Selon une autre particularité, le dispositif de transport et distribution de combustible solide est caractérisé en ce qu'il comprend un moyen de déviation des granulés, ledit moyen de déviation comprenant un conduit coudé dont les extrémités sont chacune reliée à un tuyau présent dans le dispositif, le rayon de courbure et le diamètre du conduit coudé étant adaptés pour permettre la circulation des granulés en tout point du conduit.

Un objectif supplémentaire de l'invention est de proposer un procédé de transport et distribution de combustible solide mis en oeuvre par le dispositif de transport et distribution de combustible solide, caractérisé en ce qu'il comprend :
a. une étape d'activation, par les moyens de commande, de la motorisation des moyens de guidage, de sorte que la rotation des tiges en sens opposé permette le mouvement des granulés sur les moyens de guidage,
b. une étape d'activation du bol vibrant par les moyens de commande, à une fréquence et une intensité de vibrations choisie via les moyens de commande, en fonction des mesures effectuées,
c. une étape de détection, par le moyen de détection de présence relié aux moyens de commande, d'un premier granulé de taille définie au niveau de l'entrée du premier tube évidé, suivi si le temps de détection est supérieure à t₀ de la fermeture au bout du temps t₁ du clapet obstruant ainsi l'entrée du premier tube évidé,
d. une étape de génération, par le générateur pneumatique piloté par les moyens de commande, d'au moins une impulsion de gaz comprimé arrivant par le conduit oblique formé dans la paroi du premier tube évidé, cette impulsion générant une surpression de gaz en amont du granulé permettant à ce dernier de sortir du tube et de circuler dans le tuyau jusqu'à la chambre de combustion,
e. une étape d'ouverture du clapet par les moyens de commande après un temps t₂ enregistré dans une zone mémoire des moyens de commande,
f. une étape de répétition des étapes c à e de manière à alimenter en granulés la chambre de combustion.

Selon une autre particularité, le procédé de transport et distribution de combustible solide est caractérisé en ce qu'il comprend, avant l'étape e d'ouverture du clapet par les moyens de commande, une étape de mesure de la pression dans le tuyau par l'appareil de mesure barométrique, suivie si la pression mesurée ne chute pas assez rapidement, d'une étape de génération, par le générateur pneumatique piloté par les moyens de commande, d'au moins une impulsion de gaz comprimé arrivant par le conduit oblique formé dans la paroi du premier tube évidé.

Selon une autre particularité, le procédé de transport et distribution de combustible solide est caractérisé en ce qu'il comprend :
a. une étape d'arrêt, par les moyens de commande, du bol vibrant et de la motorisation des moyens de guidage,
b. si aucun granulé n'est détecté par le capteur de présence après un temps t₃ enregistré dans une zone mémoire des moyens de commande, une étape de fermeture, par les moyens de commande du clapet obstruant ainsi l'entrée du premier tube évidé,
c. une étape de génération, par le générateur pneumatique piloté par les moyens de commande, d'au moins une impulsion de gaz comprimé arrivant par le conduit oblique formé dans la paroi du premier tube évidé, de manière à s'assurer que le tube évidé et les tuyaux sont vides de granulés, confirmé par une mesure de la pression dans le dispositif par l'appareil de mesure barométrique.

Selon une autre particularité, le procédé de transport et distribution de combustible solide est caractérisé en ce qu'il comprend, préalablement à l'étape de détection de présence d'un granulé entrant dans le tube évidé :
a. une étape de mesure, par le moyen de mesure de taille relié aux moyens de commande, de la longueur d'un granulé en mouvement sur les moyens de guidage,
b. une étape de vérification, par les moyens de commande, que la longueur du granulé est inférieure à une valeur enregistrée dans une zone mémoire des moyens de commande, cette étape étant suivie, si la longueur d'un granulé mesurée par le moyen de mesure de taille est supérieure à une valeur enregistrée dans une zone mémoire des moyens de commande, par :
c. une étape d'arrêt du bol vibrant piloté par les moyens de commande,
d. une étape d'activation de la motorisation des moyens de guidage par les moyens de commande pour inverser le sens de rotation des tiges de transport, permettant l'écartement des tiges et l'éjection du granulé des moyens de guidage

Selon une autre particularité, le procédé de transport et distribution de combustible solide est caractérisé en ce que si la longueur d'un granulé mesurée par le moyen de mesure de taille est supérieure à une valeur enregistrée dans une zone mémoire des moyens de commande, le procédé comprend :
a. une étape de réception du granulé dans le moyen de récupération du système de recirculation des granulés menant vers un deuxième tube évidé identique au premier tube évidé, le conduit oblique du deuxième tube étant destiné à être relié au générateur pneumatique, le gaz sous pression étant délivré par ledit générateur pneumatique de manière à conduire chaque granulé présent dans le deuxième tube vers le réservoir intermédiaire via un tuyau relié d'une part à la sortie dudit tube évidé et d'autre part au réservoir intermédiaire,
b. une étape de génération, par le générateur pneumatique piloté par les moyens de commande, d'au moins une impulsion de gaz comprimé arrivant par le conduit oblique formé dans la paroi du deuxième tube évidé, de sorte que le granulé soit conduit vers un moyen de découpe (62) dont la sortie débouche dans le réservoir intermédiaire, via le tuyau relié d'une part à la sortie dudit tube évidé et d'autre part au moyen de découpe,
c. une étape de récupération des granulés sectionnés par le moyen de découpe dans le réservoir intermédiaire.

Selon une autre particularité, le procédé de transport et distribution de combustible solide est caractérisé en ce que lors de l'étape de détection, si le granulé reste détectable par le moyen de détection au delà d'une durée dont la valeur t₄ est enregistrée dans une zone mémoire des moyens de commande, le procédé comprend :
a. une étape d'arrêt du bol vibrant et de maintien de l'ouverture du clapet, pilotés par les moyens de commande,
b. si le granulé est détectable par le moyen de détection au-delà de la durée t₄, une étape d'éjection du granulé par un système électromécanique comprenant une baguette métallique reliée à un électroaimant, ledit système étant compris dans le dispositif de transport et de distribution de combustible solide et disposé au niveau de l'entrée du tube évidé.

L'invention, avec ses caractéristiques et avantages, ressortira plus clairement à la lecture de la description faite en référence aux dessins annexés dans lesquels :
La figure 1 représente une vue en perspective du dispositif dans un mode de réalisation.
La figure 2 représente une vue en perspective du dispositif dans un autre mode de réalisation.
La figure 3 représente une vue en coupe longitudinale d'un tube évidé comprenant un conduit oblique réalisé dans la paroi du tube.
La figure 4 représente une vue en perspective du dispositif de positionnement.
La figure 5 représente une vue de face du tube évidé avec le dispositif de positionnement.
La figure 6a illustre une vue en coupe longitudinale du dispositif de déviation dans un mode de réalisation.
La figure 6b illustre une vue en coupe transversale du dispositif de déviation dans un mode de réalisation.

### DESCRIPTION DES MODES DE REALISATION PREFERES DE L'INVENTION

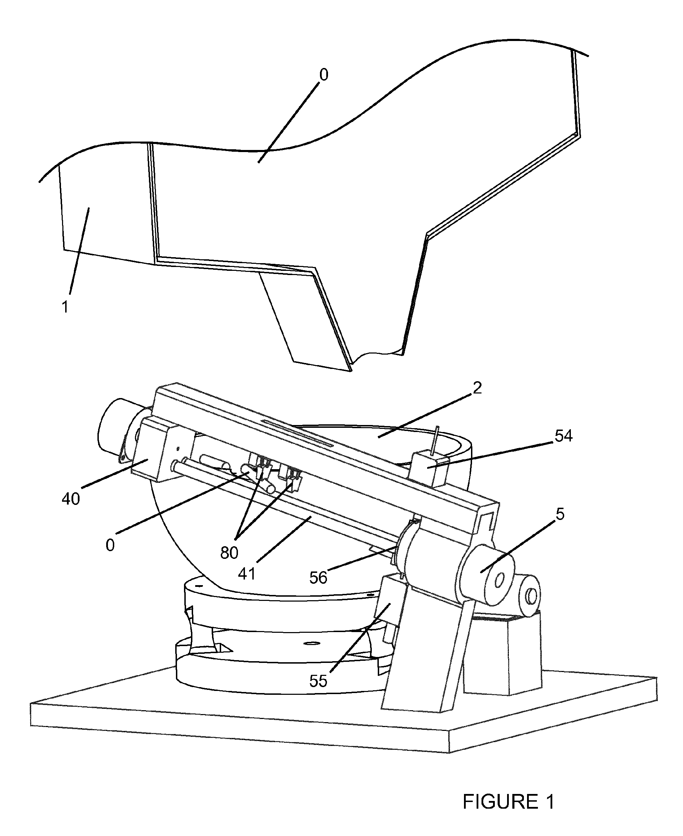

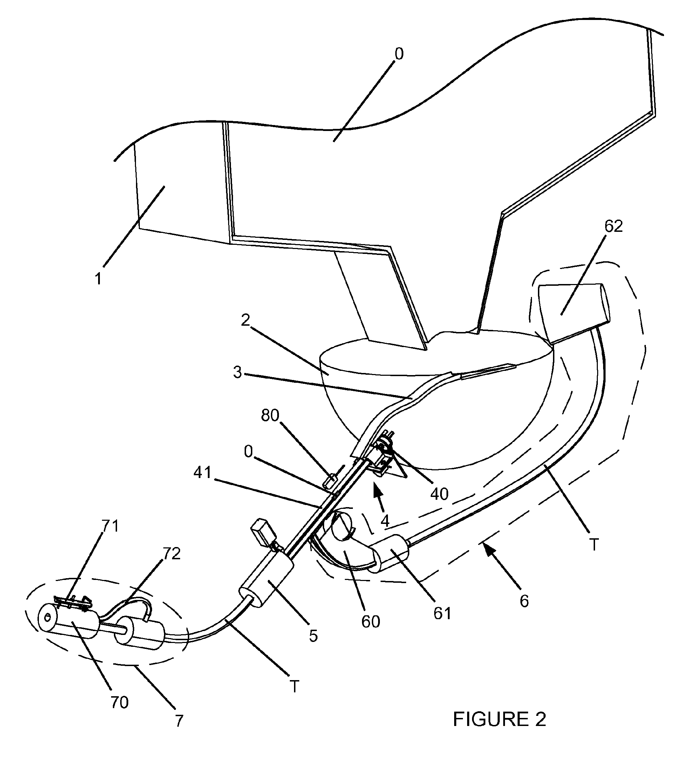

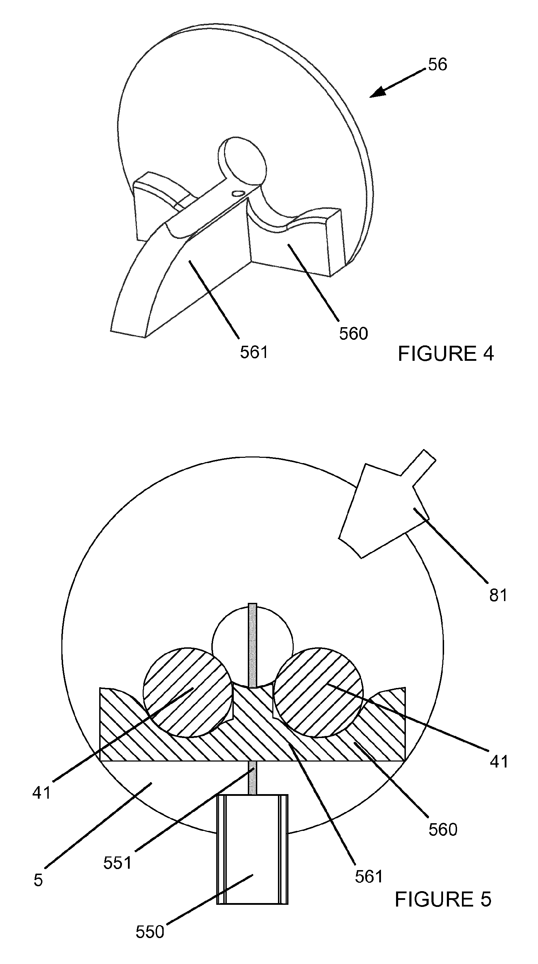

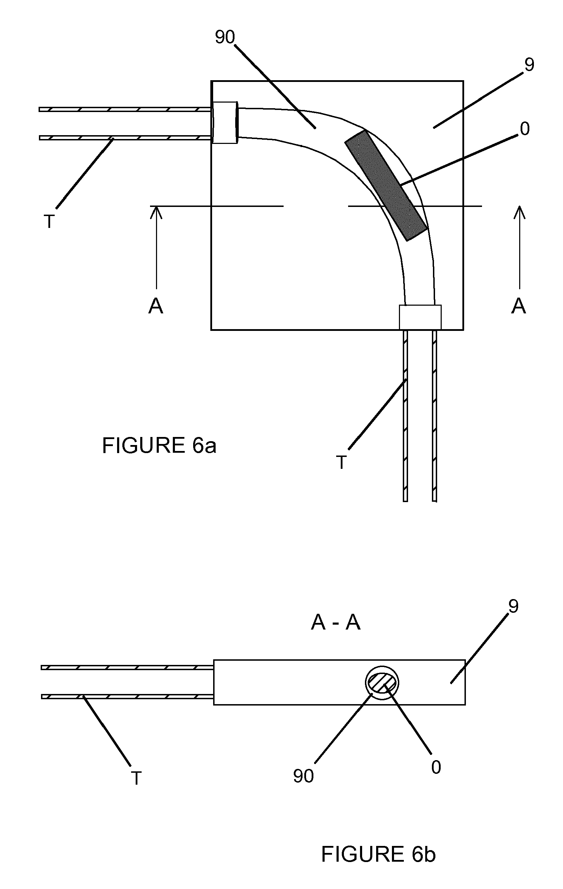

En référence aux figures 1 à 6, l'invention va maintenant être décrite.

Dans un mode de réalisation, le dispositif de transport et de distribution de combustible solide selon l'invention comprend un réservoir de stockage (1) du combustible (0). Par exemple et de manière non limitative, le combustible transporté et distribué par l'invention est un combustible issu de la biomasse, par exemple et de manière non limitative des granulés (0) cylindriques de bois reconstitué. Dans un mode de réalisation, le réservoir de stockage (1) est une trémie dont la sortie débouche dans un réservoir intermédiaire (2). Ce réservoir intermédiaire est destiné à ordonner les granulés tombant de la trémie dans ledit réservoir intermédiaire, de sorte que les granulés soient distribués un par un à la sortie du réservoir intermédiaire (2). Par exemple et de manière non limitative, ce réservoir intermédiaire est un bol vibrant (2) dont le fonctionnement est bien connu de l'homme du métier, et dont la fréquence et l'intensité des vibrations peuvent être choisies par des moyens de commande compris dans le dispositif selon l'invention ou par l'utilisateur, via les moyens de commande, lesdits moyens de commande comprenant au moins un espace mémoire. Ainsi, le choix de la fréquence et l'intensité des vibrations générées par le bol vibrant permet de contrôler la fréquence d'approvisionnement en granulés (0).

Dans un mode de réalisation, les granulés (0) prêts à sortir du bol vibrant (2) activé sont alors menés vers un élément de sortie compris dans le dispositif de transport et de distribution de combustible solide, cet élément de sortie étant par exemple et de manière non limitative un rail (3). Les granulés (0) sortent du bol vibrant un par un, à une fréquence dépendant de la fréquence et de l'intensité des vibrations du bol vibrant. L'élément de sortie mène alors les granulés en file indienne vers des moyens de guidage motorisés (4) compris dans le dispositif de transport et de distribution de combustible solide, les moyens de guidage motorisés étant eux-mêmes agencés de sorte que les granulés (0) progressent sur lesdits moyens de guidage (4) en file indienne. Dans un mode de réalisation alternatif, le dispositif de transport et de distribution de combustible solide ne comprend pas d'élément de sortie, et les granulés sortant du bol vibrant (2) vont directement vers les moyens de guidage motorisés (4). L'espacement entre les granulés (0) sur les moyens de guidage dépend de la fréquence et de l'intensité des vibrations du bol vibrant (2). Cet espacement dépend de la différence entre la vitesse de progression des granulés en sortie du bol vibrant et la vitesse de progression des granulés sur les moyens de guidage. Dans un mode de réalisation préférentiel, la vitesse de progression des granulés sur les moyens de guidage est supérieure ou égale à la vitesse de progression des granulés en sortie du bol vibrant. Dans un mode de réalisation, les moyens de guidage comprennent au moins deux tiges cylindriques parallèles (41) chacune reliée à une extrémité à des moyens de motorisation (40) pilotés par les moyens de commande. Ces moyens de motorisation (40) permettent la rotation de chaque tige (41) selon son axe de symétrie. Par exemple et de manière non limitative, les moyens de guidage (4) comprennent deux tiges destinées à être mises en rotation chacune dans un sens différent par un moteur pas à pas (40), un moteur continu ou un moteur électrique, de manière à permettre le mouvement des granulés (0) le long des tiges (41). Dans un mode de réalisation, lorsqu'un granulé (0) est présent sur les tiges des moyens de guidage (4), le changement de sens de rotation des tiges (41) réalisé par les moyens de motorisation pilotés par les moyens de commande, provoque non pas le mouvement du granulé le long des tiges, mais le happement par pincement du granulé présent sur les tiges (41). Les tiges étant élastiques, cela provoque leur écartement induisant l'éjection du ou des granulés présents sur les moyens de guidage (4). Cette fonction permet d'éliminer les granulés jugés inutilisables, par exemple à cause d'une longueur trop importante, ces granulés inutilisables étant par exemple récupérés dans un bac prévu à cet effet situé en vis-à-vis des moyens de guidage (4). Dans un mode de réalisation, le dispositif selon l'invention comprend un moyen de mesure (80) de la taille des granulés, ce moyen de mesure étant disposé en vis-à-vis des tiges (41) des moyens de guidage (4). Par exemple et de manière non limitative, ce moyen de mesure (80) comprend au moins un capteur relié aux moyens de commande, mesurant la longueur de chaque granulé circulant sur les tiges (41) et passant devant ledit capteur (80). Dans un mode de réalisation, le moyen de mesure (80) comprend deux capteurs reliés aux moyens de commande et disposés en vis-à-vis des moyens de guidage (4). Ces capteurs (80) de détection de présence sont espacés d'une longueur approximative souhaitée, qui représente la longueur maximale voulue pour un granulé. Ainsi, si les deux capteurs renvoient aux moyens de commande un signal de détection de présence d'un granulé en même temps, lesdits moyens de commande interprètent alors que la taille du granulé est plus grande que la distance entre les deux capteurs. Les moyens de commande pilotent alors les moyens de motorisation (40) qui réalisent le changement de sens de rotation des tiges (41), provoquant alors l'éjection du granulé jugé hors calibre. L'utilisation de deux capteurs présente l'avantage de ne pas nécessiter l'utilisation du paramètre de vitesse des granulés sur le moyens de guidage (4), et ainsi d'obtenir une valeur de la longueur d'un granulé même si la vitesse de progression de ce dernier sur les moyens de guidage (4) n'est pas constante. Les deux capteurs du moyen de mesure (80) permettent aussi de réguler l'approvisionnement en pellets à partir du bol vibrant (2). En effet, si les granulés circulant sur les moyens de guidage sont trop rapprochés, par exemple si le temps passé entre deux détections de granulés par un même capteur est inférieur à un temps t dont la valeur est mémorisée dans la zone mémoire des moyens de commande, alors les moyens de commande pilotent le bol vibrant (2) pour que le débit de granulés sortant dudit bol vibrant soit réduit. En revanche, si le temps passé entre deux détections de granulés par un même capteur est supérieur à un temps t' dont la valeur est mémorisée dans la zone mémoire des moyens de commande, t étant inférieur à t', alors les moyens de commande pilotent le bol vibrant (2) pour que le débit de granulés sortant dudit bol vibrant augmente.

Dans un mode de réalisation préférentiel, les tiges (41) sont inclinées de sorte que la gravité facilite le mouvement des granulés (0) vers la sortie des moyens de guidage (4). Par exemple et de manière non limitative, cette inclinaison est comprise entre 10 et 50 degrés, préférentiellement de l'ordre de 30 degrés.

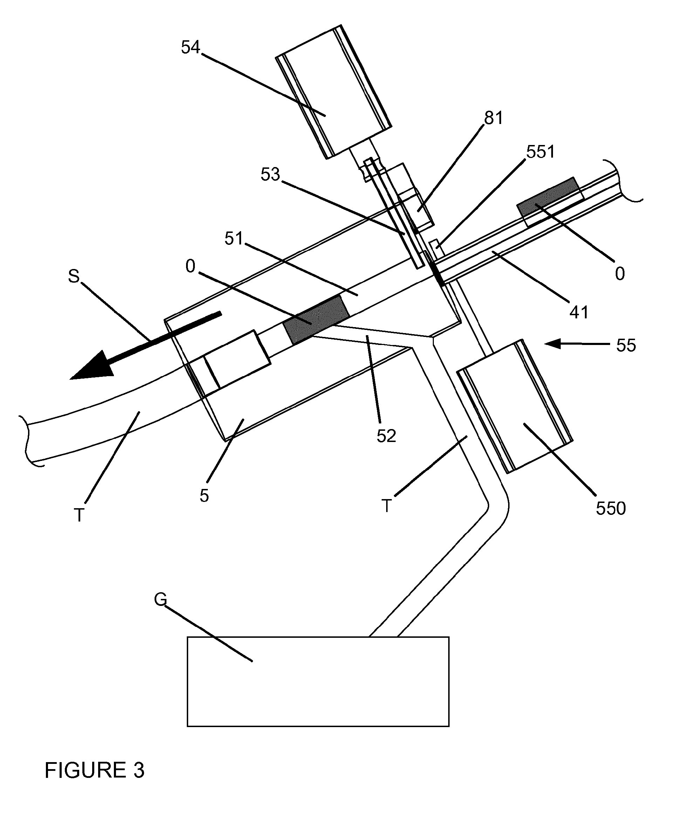

Dans un mode de réalisation, les granulés sont menés depuis les moyens de guidage (4) vers l'entrée d'un tube évidé (5) compris dans le dispositif de transport et de distribution de combustible solide, et dont le diamètre interne (51) est légèrement supérieur au diamètre des granulés combustibles. Le tube évidé comprend un dispositif de positionnement qui est par exemple un cache circulaire (56) de même diamètre que ledit tube évidé (5), la première face du dispositif de positionnement étant plane et en contact avec le tube, tandis que l'autre face du dispositif de positionnement comprend une double butée (560) sur laquelle les extrémités libres des tiges reposent, de sorte que l'extrémité libre de chaque tige soit positionnée pour permettre l'entrée des granulés dans le tube évidé, ainsi qu'un bec (561) facilitant le guidage des granulés dans l'ouverture du tube évidé (5). En référence à la figure 3, ce tube évidé (5) comprend une ouverture (52) réalisée dans l'épaisseur de la paroi, cette ouverture formant un conduit oblique (52) par rapport à l'axe du tube et débouchant dans la partie évidée (51) du tube (5) : ce tube ainsi usiné forme un tube venturi. Le conduit oblique (52) est destiné à être relié, via par exemple des tuyaux (T) rigides, semi-rigides ou souples, à un générateur pneumatique (G) piloté par les moyens de commande et agencé pour délivrer un gaz sous pression. De manière générale, tous les éléments du dispositif sont reliés entre eux par des tuyaux (T) souples, rigides ou semi-rigides. De manière préférentielle, des tuyaux semi-rigides seront utilisés de manière à éviter une trop grande déformation des tuyaux, par exemple à cause de la pression. Dans un mode de réalisation, afin de simplifier l'installation, des modules permettant des changements brusques de direction sont installés entre les tuyaux (T). Par exemple, ces modules (9) comprennent deux plaques rectangulaires sensiblement identiques, chacune de ces plaques comprenant une rainure en forme d'arc de cercle de sorte que, une fois les deux plaques assemblées l'une sur l'autre, les rainures forment un conduit coudé (90) dont les extrémités sont chacune reliée à un tuyau (T) de l'installation. Le diamètre et le rayon de courbure de ce conduit (90) sont adaptés de sorte que le passage des granulés (0) en tout point du conduit coudé (90) soit possible. Selon une alternative de réalisation, les modules permettant ces changements de direction sont des tubes rigides coudés.

Dans un mode de réalisation non limitatif, le générateur pneumatique (G) est agencé de manière à délivrer des impulsions de gaz comprimé, par exemple de l'air comprimé, dont la durée et la pression sont choisies par un utilisateur via les moyens de commande et/ou programmées dans une zone mémoire des moyens de commande. Ainsi, au moins une impulsion de gaz comprimé délivrée dans le conduit oblique (52) propulsera chaque granulé, présent dans le tube (5) entre la sortie du conduit oblique et la sortie du tube évidé (5), toujours dans le même sens (S) vers la chambre de combustion via un tuyau relié d'une part à la sortie du tube évidé et d'autre part à l'entrée de la chambre de combustion. Par exemple et de manière non limitative, le générateur pneumatique délivre deux impulsions de sorte que la deuxième impulsion soit déclenchée avant que la vitesse du granulé, obtenu par l'impulsion précédente, soit nulle.

Dans un mode de réalisation, le dispositif comprend un clapet (53) solidaire du tube évidé (5), ce clapet étant couplé à un moyen de motorisation (54) piloté par les moyens de commande, par exemple un électroaimant, le clapet (53) étant destiné à obstruer ou non l'entrée du tube évidé (5), par exemple pour éviter que trop de granulés (0) ne se retrouvent en même temps dans le tube évidé (5), par exemple pas plus de deux ou trois granulés présents dans le tube (5) en même temps. Ce clapet (53) est également destiné à améliorer la propulsion des granulés (0) et diminuer la quantité de gaz comprimé nécessaire à cette propulsion, le clapet (53) assurant une fermeture étanche du tube évidé (5) évitant ainsi les fuites de gaz au niveau de l'entrée du tube évidé (5). Dans un mode de réalisation préférentiel, le dispositif selon l'invention comprend un moyen de détection de présence (81) de granulés disposé à l'entrée du tube évidé (5), ledit moyen de détection (81) étant relié aux moyens de commande afin d'envoyer les informations de détection auxdits moyens de commande. Ainsi, les moyens de commande pilotent la motorisation (54) du clapet (53) de manière à obstruer l'entrée du tube évidé (5) au bout d'un temps t₁ suivant la détection d'un granulé à l'entrée du tube évidé, ce temps t₁ étant prédéterminé et enregistré dans une zone mémoire des moyens de commande. Par exemple et de manière non limitative, ce temps t₁ est déterminé de sorte que les moyens de commande activent la motorisation (54) du clapet (53), afin que ce dernier obstrue l'entrée du tube évidé (5) une fois que le granulé (0) détecté par le moyen de détection (81) est entièrement rentré dans le tube évidé (5). Dans un mode de réalisation, ce moyen de détection de présence (81) est également un moyen de confirmation ou d'infirmation de taille normale d'un granulé par comparaison du temps de présence du granulé détecté par le moyen de détection (81) à l'entrée du tube évidé (5) par rapport à un temps t₀, prédéfini et mémorisé dans une zone mémoire des moyens de commande.

Dans un mode de réalisation, les moyens de détection (81) comptent les granulés (0) détectés au cours du fonctionnement du dispositif selon l'invention, le comptage étant mémorisé dans une zone mémoire des moyens de commande. De la sorte, la quantité de granulés (0) convoyés par le dispositif selon l'invention est connue à tout moment. Dans un mode de réalisation, le comptage des granulés est réalisé par les moyens de détection en comparant les mesures de temps de présence de granulés sur une période donnée, par rapport à une valeur de temps de présence enregistrées dans une zone mémoire des moyens de commande.

Dans un mode de réalisation, le dispositif selon l'invention comprend un système de recirculation (6) des granulés vers le réservoir intermédiaire (2), ce système (6) étant destiné à récupérer les granulés (0) passés entre les tiges tournantes (41) des moyens de guidage (4). Par exemple et de manière non limitative, le système de recirculation comprend un moyen de récupération (60) des granulés situé en vis-à-vis des tiges tournantes (41), ledit moyen de récupération (60) étant destiné à conduire les granulés vers un deuxième tube évidé (61) sensiblement identique au premier tube évidé (5), c'est-à-dire comprenant un conduit oblique débouchant dans la partie évidée du second tube (61) et destiné à être relié au générateur pneumatique (G), le gaz sous pression étant délivré par ledit générateur pneumatique de manière à conduire chaque granulé (0) présent dans le deuxième tube (61) vers le réservoir intermédiaire (2) via un tuyau (T) relié d'une part à la sortie dudit tube évidé et d'autre part au réservoir intermédiaire (2).

Dans un mode de réalisation, les granulés (0) débouchant du système de recirculation (6) peuvent être sectionnés avant d'arriver dans le bol vibrant (2), à l'aide d'un moyen de découpe (62) automatique piloté par les moyens de commande, ledit moyen de découpe comprenant par exemple et de manière non limitative un couteau mis en rotation à l'aide d'un moteur.

Dans un mode de réalisation, le dispositif selon l'invention comprend en sortie un dispositif de freinage (7) des granulés, destiné à ralentir les granulés avant leur entrée dans la chambre de combustion. Dans un mode de réalisation préférentiel, ce dispositif de freinage (7) comprend au moins un tube évidé (70) relié à la sortie (S) du dispositif de freinage. Ce tube (70) comprend un levier (71) solidaire d'un obturateur (711) destiné à bloquer la sortie (S) du dispositif de freinage (7) menant vers la chambre de combustion. Par exemple et de façon non limitative, l'obturateur est solidaire du centre du levier. Une extrémité du levier (71) est en outre reliée à un piston (710) logé dans une ouverture formée dans le tube évidé (70) du dispositif de freinage. Ladite ouverture communique avec le tuyau (T) reliant le dispositif de freinage et le premier tube évidé, via un raccord (72). De la sorte, lorsque un granulé provenant du premier tube évidé arrive au niveau de l'entrée du dispositif de freinage, la surpression de gaz en amont dudit granulé circulant dans le tuyau met le piston (710) en mouvement, ce qui d'une part entraine le levier (71) et par conséquent l'obturateur (711) qui cesse d'obstruer la sortie du dispositif de freinage permettant la sortie du granulé dudit dispositif et son éjection dans la chambre de combustion par l'intermédiaire d'un tuyau reliant la sortie du dispositif de freinage et l'entrée de la chambre de combustion, ledit tuyau étant non combustible, et d'autre part diminue la pression de gaz en sortie du dispositif de freinage, permettant d'éviter une éjection trop brutale du granulé dans la chambre de combustion et d'atténuer le bruit provoqué par l'éjection des granulés dans la chambre de combustion.

Dans un mode de réalisation, le dispositif de transport et distribution de granulés comprend au moins un appareil de mesure barométrique contrôlé par les moyens de commande, par exemple un baromètre, permettant de mesurer la pression de gaz en tout point du dispositif. Un tel moyen de mesure permet notamment de repérer les éventuels endroits soumis à des surpressions, permettant in fine de détecter les endroits dans lesquels des granulés (0) sont susceptibles d'être coincés. Ainsi, le moyen de mesure barométrique mesurant la pression pendant un temps déterminé, si la pression dans le tuyau ne chute pas assez rapidement, par exemple selon une loi de variation de pression enregistrée dans une zone mémoire des moyens de commande, alors les moyens de commande pilotent le générateur pneumatique (G) qui génèrent de nouvelles impulsions pneumatiques.

Dans un mode de réalisation, le dispositif comprend un second capteur de détection de granulés (0), relié aux moyens de commande et placé en sortie du dispositif. Par exemple et de manière non limitative, ce second capteur effectue un comptage des granulés sortant du dispositif, la valeur de ce comptage étant périodiquement enregistré dans un espace mémoire des moyens de commande. Ainsi, par comparaison des comptages réalisés par le premier capteur de détection (81) et le second capteur de détection, les moyens de commande sont en mesure de conclure à la présence ou non de granulés dans les tuyaux du dispositif, et en cas de présence de granulés (0) dans les tuyaux (T) et/ou tubes (5, 7) du dispositif, les moyens de commande sont en mesure d'en connaitre le nombre.

Un objectif supplémentaire de l'invention est de proposer un procédé de transport et distribution de combustible solide, qui va maintenant être décrit.

La première étape du procédé consiste en l'activation, par les moyens de commande, de la motorisation (40) des moyens de guidage (4), afin de mettre les tiges (41) en mouvement rotatif de manière à permettre le mouvement des granulés (0) depuis le réservoir intermédiaire (2) vers le premier tube évidé (5).

La deuxième étape du procédé consiste en l'activation, par les moyens de commande, du bol vibrant (2) à une fréquence et une intensité de vibrations choisie en fonction des mesures effectuées.

La troisième étape du procédé consiste en la détection, par les moyens de détection de présence (81) relié aux moyens de commande, d'un premier granulé de taille définie au niveau de l'entrée du premier tube évidé (5), suivi, si le temps de détection les moyens de détection de présence (81) est supérieure au temps t₀, de la fermeture après un temps t₁, du clapet (53) obstruant ainsi l'entrée du premier tube évidé, cette fermeture étant pilotée par les moyens de commande. De la sorte, le premier tube évidé (5) comprend un nombre limité de granulés (0), dépendant de la fréquence et de l'intensité des vibrations du bol vibrant (2).

La quatrième étape du procédé consiste en la génération, par le générateur pneumatique (G) piloté par les moyens de commande, d'au moins une impulsion de gaz comprimé arrivant par le conduit oblique (52) formé dans la paroi du tube évidé, cette impulsion générant une surpression de gaz en amont du granulé permettant à ce dernier de sortir du tube évidé (5) et de circuler dans le tuyau (T) jusqu'à la chambre de combustion.

La cinquième étape du procédé consiste en l'ouverture du clapet (53) par les moyens de commande via la motorisation (54) associée au clapet, et cela après un temps t₂ enregistré dans une zone mémoire des moyens de commande. Les étapes trois à cinq sont ainsi répétées de manière à alimenter en continu la chambre de combustion, tant que des granulés (0) sont présents dans la trémie (1) et/ou le bol vibrant (2).

Dans un mode de réalisation, le procédé peut comprendre en amont de la cinquième étape consistant en l'ouverture du clapet (53) par les moyens de commande via la motorisation (54) associée au clapet, une sixième étape de mesure de la pression dans le tuyau (T) par l'appareil de mesure barométrique, suivie si la pression mesurée ne chute pas assez rapidement par exemple selon une loi de variation de pression enregistrée dans une zone mémoire des moyens de commande, d'une étape de génération, par le générateur pneumatique (G) piloté par les moyens de commande, d'au moins une impulsion de gaz comprimé arrivant par le conduit oblique (52) formé dans la paroi du premier tube évidé (5).

Dans un mode de réalisation, le procédé comprend les étapes supplémentaires suivantes.

Au cours d'une septième étape, les moyens de commande pilotent l'arrêt du bol vibrant (2) et de la motorisation (40) des moyens de guidage (4).

Au cours de la huitième étape, si aucun granulé n'est détecté par le capteur de présence (81) après un temps t₃ enregistré dans une zone mémoire des moyens de commande, les moyens de commande pilotent la motorisation (54) associée au clapet (53) de manière à obstruer l'entrée du premier tube évidé (5). Ainsi, aucun échange gazeux n'est possible entre la chambre de combustion et la trémie (1) stockant les granulés. Tout risque de condensation dans les tuyaux (T) et tout risque de retour de fumée de combustion à travers les tuyaux du dispositif selon l'invention sont évités.

Au cours d'une neuvième étape, le générateur pneumatique (G) piloté par les moyens de commande génère au moins une impulsion de gaz comprimé vers le conduit oblique (52) du premier tube évidé (5), de manière à s'assurer que le tube évidé (5) et les tuyaux (T) sont bien vides de granulés. De manière préférentielle, le générateur pneumatique génère une pluralité d'impulsions.

Dans un mode de réalisation alternatif, lorsque le dispositif de transport et distribution de combustible solide comprend un moyen de mesure de taille (80) des granulés, le procédé de transport et distribution de combustible solide comprend, préalablement à la troisième étape, deux étapes supplémentaires.

La première étape supplémentaire consiste en la mesure, par les moyens de mesure de taille de granulés reliés aux moyens de commande, de la longueur d'un granulé en mouvement sur les moyens de guidage.

La deuxième étape supplémentaire est une étape de vérification, par les moyens de commande, que la longueur du granulé mesurée à l'étape précédente est inférieure à une valeur enregistrée dans une zone mémoire des moyens de commande. Si c'est bien le cas, le procédé reprend à la quatrième étape décrite plus haute.

Dans le cas où les moyens de mesure de taille (80) de granulés, reliés aux moyens de commande, détectent au moins un granulé dont la longueur est supérieure à la valeur enregistrée dans une zone mémoire des moyens de commande, alors le procédé comprend :
- Une étape d'arrêt du bol vibrant (2) piloté par les moyens de commande ;
- Une étape d'activation de la motorisation (40) des moyens de guidage (4) par les moyens de commande pour inverser le sens de rotation des tiges de transport (41), permettant l'écartement des tiges et l'éjection du granulé des moyens de guidage ;

Si le dispositif de transport et de distribution de combustible comprend un système de récupération des granulés, et dans le cas où les moyens de mesure de taille (80) de granulés, reliés aux moyens de commande, détectent au moins un granulé dont la longueur est supérieure à la valeur enregistrée dans une zone mémoire des moyens de commande, alors le procédé comprend également :
- Une étape de réception du granulé dans le moyen de récupération (60) du système de recirculation (6) des granulés menant vers le deuxième tube évidé (61) ;
- Une étape de génération, par le générateur pneumatique (G) piloté par les moyens de commande, d'au moins une impulsion de gaz comprimé arrivant par le conduit oblique formé dans la paroi du deuxième tube évidé (61), de sorte que le granulé soit conduit vers un moyen de découpe (62), dont la sortie débouche dans le réservoir intermédiaire (2), via le tuyau (T) relié d'une part à la sortie dudit tube évidé (61) et d'autre part au moyen de découpe ;
- Une étape de récupération des granulés (0) sectionnés par le moyen de découpe dans le réservoir intermédiaire (2).

Dans un mode de réalisation, une fois les granulés jugés trop grand découpés et renvoyés vers le réservoir intermédiaire (2), le procédé reprend à la première étape.

Il est parfois possible qu'un granulé soit coincé juste au niveau de l'entrée du premier tube évidé (5). Dans un mode de réalisation, lors de la troisième étape de détection d'un granulé à l'entrée du premier tube évidé (5), si ledit granulé (0) est détectable en continu par les moyens de détection (81) au delà d'une durée dont la valeur t₄ est enregistrée dans une zone mémoire des moyens de commande, alors le procédé comprend une procédure pour décoincer le granulé, cette procédure comprenant :
- Une étape d'arrêt du bol vibrant (2) et de maintien de l'ouverture du clapet (53) au niveau de l'entrée du premier tube évidé (5), ces actions étant pilotées par les moyens de commande ;
- Une étape de génération, par le générateur pneumatique (G) piloté par les moyens de commande, d'au moins une impulsion de gaz comprimé arrivant par le conduit oblique (52) formé dans la paroi du premier tube évidé (5), de manière à exercer une pression sur le granulé pour l'éloigner de l'entrée du premier tube évidé et lui faire remonter, au moins en partie, la pente inclinée formée par les tiges tournantes (41) ;
- Une étape de répétition de l'étape précédente tant que le granulé est détectable par le moyen de détection (81) au delà de la durée t₄.

Il est parfois possible qu'un granulé (0) reste coincé au niveau de l'entrée du premier tube évidé (5), ce qui se caractérise par une détection en continu du granulé par les moyens de détection (81). Si la deuxième étape de la procédure pour décoincer le granulé est répétée plus de n fois, n étant une valeur prédéterminée enregistrée dans une zone mémoire des moyens de commande, alors le procédé comprend une procédure d'éjection, cette procédure comportant :
- Une étape d'activation de la motorisation (40) des moyens de guidage (4) par les moyens de commande pour inverser le sens de rotation des tiges de transport (41), permettant l'écartement des tiges et l'éjection du granulé des moyens de guidage ;
- Une étape de récupération des granulés (0) rejetés dans le bac de récupération prévu à cet effet.

Dans un mode de réalisation alternatif et préféré, le granulé est éjecté selon une procédure d'éjection différente. Pour ce faire, le dispositif de transport et de distribution de combustible solide comprend un système électromécanique (55) disposé en amont du tube évidé (5), à proximité immédiate de l'entrée du tube évidé (5). Ce système comporte une baguette métallique (551) et un électroaimant (550) piloté par les moyens de commande. Le système comporte une position de passage du granulé lorsque la baguette métallique est à l'intérieur du système, et une position d'éjection du granulé lorsque la baguette métallique est au moins en partie à l'extérieur du système. Le système est positionné de sorte que, lorsque la baguette métallique est propulsée à l'extérieur du système, cette dernière passe entre les tiges du moyen de guidage (4) de manière à éjecter un granulé bloqué à l'entrée du tube évidé (5).

Ainsi, lors de la troisième étape de détection d'un granulé à l'entrée du premier tube évidé (5), si ledit granulé (0) est détectable en continu par les moyens de détection (81) au delà d'une durée dont la valeur t₄ est enregistrée dans une zone mémoire des moyens de commande, alors le procédé comprend cette procédure alternative d'éjection du granulé, comportant :
- Une étape d'arrêt du bol vibrant (2) et de maintien de l'ouverture du clapet (53), pilotés par les moyens de commande,
- Si le granulé est détectable par le moyen de détection (81) au-delà de la durée t₄, une étape d'éjection du granulé par un système électromécanique (55) comprenant une baguette métallique (551) reliée à un électroaimant (550), ledit système étant compris dans le dispositif de transport et de distribution de combustible solide et disposé au niveau de l'entrée du tube évidé.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, et l'invention ne doit pas être limitée aux détails donnés ci-dessus.

## Revendications

1. Dispositif de transport et distribution de combustible solide comprenant au moins un réservoir de stockage (1) de combustible présenté sous forme de granulés (0) de taille sensiblement uniforme, **caractérisé en ce qu'**il comprend au moins un réservoir intermédiaire (2) agencé pour sélectionner chaque granulé combustible un par un et pour mener lesdits granulés vers des moyens de guidage (4) motorisés des granulés, lesdits moyens de guidage (4) étant compris dans le dispositif et agencés de sorte que les granulés progressent sur lesdits moyens de guidage (4) en file indienne vers l'entrée d'un tube évidé (5) compris dans le dispositif et dont le diamètre interne (51) est sensiblement supérieur au diamètre d'un granulé, le tube évidé (5) étant relié par un tuyau (T) à une chambre de combustion, le tube comprenant une ouverture réalisée dans l'épaisseur de sa paroi et formant un conduit oblique (52) par rapport à l'axe du tube débouchant dans la partie évidée (51) du tube, le conduit oblique étant destiné à être relié à un générateur pneumatique (G) agencé pour délivrer un gaz sous pression de manière à conduire chaque granulé présent dans le tube (5) vers la chambre de combustion via le tuyau (T) relié à la chambre de combustion, le dispositif comprenant en outre des moyens de commande destinés à piloter au moins les éléments motorisés et le générateur pneumatique (G) dudit dispositif.

2. Dispositif de transport et distribution de combustible solide selon la revendication précédente, **caractérisé en ce que** le réservoir intermédiaire est un bol vibrant (2) dont la fréquence et l'intensité des vibrations sont choisies via les moyens de commande.

3. Dispositif de transport et distribution de combustible solide selon l'une quelconque des revendications précédentes, **caractérisé en ce que** les moyens de guidage (4) comprennent deux tiges cylindriques parallèles (41) destinées à être reliées à des moyens de motorisation (40) pilotés par les moyens de commande et permettant la rotation axiale de chacune des tiges, les tiges (41) tournant en sens opposé de manière à permettre le mouvement des granulés vers le tube évidé (5), les tiges étant inclinées de sorte que la gravité facilite le mouvement des granulés en direction du tube évidé (5).

4. Dispositif de transport et distribution de combustible solide selon l'une quelconque des revendications précédentes, **caractérisé en ce qu'**il comprend un moyen de mesure de la taille (80) des granulés situé en vis-à-vis des moyens de guidage (4), ledit moyen de mesure (80) étant au moins un capteur relié aux moyens de commande et destiné à mesurer la longueur de chaque granulé progressant sur les moyens de guidage (4).

5. Dispositif de transport et distribution de combustible solide selon la revendication précédente, **caractérisé en ce que** le moyen de mesure de la taille (80) des granulés situé en vis-à-vis des moyens de guidage (4) comprend deux capteurs reliés aux moyens de commande, positionnables de sorte qu'ils soient distants d'une longueur approximative souhaitée, et destinés via les moyens de commande d'une part à mesurer la longueur d'un granulé (0) quelque soit la vitesse du granulé et d'autre part à réguler l'approvisionnement en granulés du bol vibrant (2).

6. Dispositif de transport et distribution de combustible solide selon l'une quelconque des revendications précédentes, **caractérisé en ce qu'**il comprend un clapet (53) solidaire du tube évidé (5), le clapet étant couplé à des moyens de motorisation (54) pilotés par les moyens de commande pour boucher ou non l'entrée dudit tube évidé (5).

7. Dispositif de transport et distribution de combustible solide selon l'une quelconque des revendications précédentes, **caractérisé en ce qu'**il comprend un moyen de détection de présence (81) de granulés et de confirmation ou infirmation d'une taille normale par comparaison du temps de présence du granulé détecté par le moyen de détection de présence (81) à l'entrée du tube évidé (5) par rapport à un temps t₀, le clapet (53) étant piloté par les moyens de commande de manière à obstruer le conduit principal (51) du tube (5) au bout d'un temps t₁ suivant la détection d'un granulé, ces temps t₀ et t₁ étant prédéfinis et mémorisés dans une zone mémoire des moyens de commande.

8. Dispositif de transport et distribution de combustible solide selon l'une quelconque des revendications précédentes, **caractérisé en ce que** les moyens de motorisation (40) des moyens de guidage (4) permettent sur commande d'inverser le sens de rotation des tiges (41) provoquant, en cas de présence sur les moyens de guidage (4) de certains granulés (0) ne répondant pas aux critères dimensionnels mémorisés et mesurés, le pincement d'un tel granulé par les tiges induisant l'écartement desdites tiges (41) et la chute du granulé, de manière à empêcher lesdits granulés ne répondant pas aux critères dimensionnels mémorisés et mesurés d'accéder à l'entrée du premier tube évidé (5).

9. Dispositif de transport et distribution de combustible solide selon l'une quelconque des revendications précédentes, **caractérisé en ce qu'**il comprend un élément de sortie (3) en communication avec le réservoir intermédiaire (2), le dispositif comprenant également en sortie un dispositif de freinage (7) des granulés, ralentissant les granulés (0) avant leur entrée dans la chambre de combustion.

10. Dispositif de transport et distribution de combustible solide selon l'une quelconque des revendications précédentes, **caractérisé en ce qu'**il comprend au moins un appareil de mesure barométrique permettant de mesurer la pression de gaz en tout point du dispositif, et déclenche de nouvelles impulsions pneumatiques si la pression ne chute pas assez rapidement.

11. Dispositif de transport et distribution de combustible solide selon l'une quelconque des revendications précédentes, **caractérisé en ce qu'**il comprend un moyen de déviation (9) des granulés, ledit moyen de déviation comprenant un conduit coudé (90) dont les extrémités sont chacune reliée à un tuyau (T) présent dans le dispositif, le rayon de courbure et le diamètre du conduit coudé (90) étant adaptés pour permettre la circulation des granulés (0) en tout point du conduit (90).

12. Procédé de transport et distribution de combustible solide mis en oeuvre par le dispositif de transport et distribution de combustible solide selon l'une quelconque des revendications précédentes, **caractérisé en ce qu'**il comprend :
a. une étape d'activation, par les moyens de commande, de la motorisation (40) des moyens de guidage (4), de sorte que la rotation des tiges (41) en sens opposé permette le mouvement des granulés (0) sur les moyens de guidage,
b. une étape d'activation du bol vibrant (2) par les moyens de commande, à une fréquence et une intensité de vibrations choisie via les moyens de commande, en fonction des mesures effectuées,
c. une étape de détection, par le moyen de détection de présence (81) relié aux moyens de commande, d'un premier granulé de taille définie au niveau de l'entrée du premier tube évidé (5), suivi si le temps de détection est supérieure à t₀ de la fermeture au bout du temps t₁ du clapet (53) obstruant ainsi l'entrée du premier tube évidé (5),
d. une étape de génération, par le générateur pneumatique (G) piloté par les moyens de commande, d'au moins une impulsion de gaz comprimé arrivant par le conduit oblique (52) formé dans la paroi du premier tube évidé (5), cette impulsion générant une surpression de gaz en amont du granulé (0) permettant à ce dernier de sortir du tube (5) et de circuler dans le tuyau (T) jusqu'à la chambre de combustion,
e. une étape d'ouverture du clapet (53) par les moyens de commande après un temps t₂ enregistré dans une zone mémoire des moyens de commande,
f. une étape de répétition des étapes c à e de manière à alimenter en granulés (0) la chambre de combustion.

13. Procédé de transport et distribution de combustible solide selon la revendication précédente **caractérisé en ce qu'**il comprend, avant l'étape e d'ouverture du clapet (53) par les moyens de commande, une étape de mesure de la pression dans le tuyau (T) par l'appareil de mesure barométrique, suivie si la pression mesurée ne chute pas assez rapidement, d'une étape de génération, par le générateur pneumatique (G) piloté par les moyens de commande, d'au moins une impulsion de gaz comprimé arrivant par le conduit oblique (52) formé dans la paroi du premier tube évidé (5),

14. Procédé de transport et distribution de combustible solide selon l'une quelconque des revendications 12 ou 13, **caractérisé en ce qu'**il comprend :
a. une étape d'arrêt, par les moyens de commande, du bol vibrant (2) et de la motorisation (40) des moyens de guidage (4),
b. si aucun granulé n'est détecté par le capteur de présence (81) après un temps t₃ enregistré dans une zone mémoire des moyens de commande, une étape de fermeture, par les moyens de commande du clapet (53) obstruant ainsi l'entrée du tube évidé (5),
c. une étape de génération, par le générateur pneumatique (G) piloté par les moyens de commande, d'au moins une impulsion de gaz comprimé arrivant par le conduit oblique (52) formé dans la paroi du premier tube évidé (5), de manière à s'assurer que le tube évidé (5) et les tuyaux (T) sont vides de granulés, confirmé par une mesure de la pression dans le dispositif par l'appareil de mesure barométrique.

15. Procédé de transport et distribution de combustible solide selon l'une quelconque des revendications 12 à 14, **caractérisé en ce qu'**il comprend, préalablement à l'étape de détection de présence d'un granulé entrant dans le tube évidé (5) :
a. une étape de mesure, par le moyen de mesure de taille (80) relié aux moyens de commande, de la longueur d'un granulé (0) en mouvement sur les moyens de guidage (4),
b. une étape de vérification, par les moyens de commande, que la longueur du granulé (0) est inférieure à une valeur enregistrée dans une zone mémoire des moyens de commande, cette étape étant suivie, si la longueur d'un granulé mesurée par le moyen de mesure de taille (80) est supérieure à une valeur enregistrée dans une zone mémoire des moyens de commande, par :
c. une étape d'arrêt du bol vibrant (2) piloté par les moyens de commande,
d. une étape d'activation de la motorisation (40) des moyens de guidage (4) par les moyens de commande pour inverser le sens de rotation des tiges (41) de transport, permettant l'écartement des tiges et l'éjection du granulé des moyens de guidage (4).

16. Procédé de transport et distribution de combustible solide selon l'une quelconque des revendications 12 à 15, **caractérisé en ce que** si la longueur d'un granulé mesurée par le moyen de mesure de taille (80) est supérieure à une valeur enregistrée dans une zone mémoire des moyens de commande, le procédé comprend :
a. une étape de réception du granulé dans le moyen de récupération (60) du système de recirculation (6) des granulés menant vers un deuxième tube évidé (61) identique au premier tube évidé (5), le conduit oblique du deuxième tube (61) étant destiné à être relié au générateur pneumatique (G), le gaz sous pression étant délivré par ledit générateur pneumatique de manière à conduire chaque granulé (0) présent dans le deuxième tube (61) vers le réservoir intermédiaire (2) via un tuyau (T) relié d'une part à la sortie dudit tube évidé (61) et d'autre part au réservoir intermédiaire (2),
b. une étape de génération, par le générateur pneumatique piloté par les moyens de commande, d'au moins une impulsion de gaz comprimé arrivant par le conduit oblique formé dans la paroi du deuxième tube évidé (61), de sorte que le granulé (0) soit conduit vers un moyen de découpe (62) dont la sortie débouche dans le réservoir intermédiaire (2), via le tuyau (T) relié d'une part à la sortie dudit tube évidé (61) et d'autre part au moyen de découpe,
c. une étape de récupération des granulés (0) sectionnés par le moyen de découpe (62) dans le réservoir intermédiaire (2).

17. Procédé de transport et distribution de combustible solide selon l'une quelconque des revendications 12 à 16, **caractérisé en ce que** lors de l'étape de détection, si le granulé reste détectable par le moyen de détection (81) au delà d'une durée dont la valeur t₄ est enregistrée dans une zone mémoire des moyens de commande, le procédé comprend :
a. une étape d'arrêt du bol vibrant (2) et de maintien de l'ouverture du clapet (53), pilotés par les moyens de commande,
b. si le granulé est détectable par le moyen de détection (81) au-delà de la durée t₄, une étape d'éjection du granulé par un système électromécanique (55) comprenant une baguette métallique (551) reliée à un électroaimant (550), ledit système étant compris dans le dispositif de transport et de distribution de combustible solide et disposé au niveau de l'entrée du tube évidé.
